# EUROPÄISCHE PATENTSCHRIFT

(11) **EP 1 689 087 B1**
(45) Veröffentlichungstag und Bekanntmachung des Hinweises auf die Patenterteilung: **02.07.2008**
(21) Anmeldenummer: 05002620.2
(22) Anmeldetag: 08.02.2005
(51) Int. Cl.: H04B 1/707, H04J 11/00

(54) **Verfahren zum Zuweisen und Verfahren zum Belegen von Codes für Datenübertragungen zwischen einer Funkstation und wenigstens einer Teilnehmerstation über eine Luftschnittstelle eines Funkkommunikationssystems sowie netzseitige Einrichtung und Funkstation**
Method for allocating and scheduling transmission codes between a base station and at least one mobile station over the radio interface of a radio communication system as well as base station and base station controller.
Procédé d'allocation et de délivrance des codes de transmission entre une station de base et au moins une station mobile sur l'interface radio d'un système de communications, station de base et controlleur de stations de base.

(43) Veröffentlichungstag der Anmeldung: 09.08.2006
(73) Patentinhaber: Nokia Siemens Networks GmbH & Co. KG, 81541 München (DE)
(72) Erfinder: Breuer, Volker, 16727 Bötzow (DE); Junghanns, Steffen, 89275 Elchingen (DE); Lamprecht, Frank, 10439 Berlin (DE); Splett, Armin, Dr., 89081 Ulm (DE); Ulrich, Thomas, 67098 Bad Dürkheim (DE); Wolff, Gunter, Dr., 89081 Ulm (DE)

(56) Entgegenhaltungen:
- US-A1- 2002 191 579
- US-A1- 2003 185 281
- US-A1- 2004 081 130
- SHANBHAG A G ET AL: "Peak-to-average reduction via optimal Walsh code allocation in third generation CDMA systems" SPREAD SPECTRUM TECHNIQUES AND APPLICATIONS, 2000 IEEE SIXTH INTERNATIONAL SYMPOSIUM ON 6-8 SEPTEMBER 2000, PISCATAWAY, NJ, USA,IEEE, Bd. 2, 6. September 2000 (2000-09-06), Seiten 560-564, XP010516641 ISBN: 0-7803-6560-7

## Beschreibung

Die Erfindung betrifft ein Verfahren zum Zuweisen und ein verfahren zum Belegen von Codes für Datenübertragungen zwischen einer Funkstation und wenigstens einer Teilnehmerstation über eine Luftschnittstelle eines Funkkommunikationssystems sowie eine entsprechende netzseitige Einrichtung und eine entsprechende Funkstation.

In Funkkommunikationssystemen mit einer CDMA-Komponente (CDMA: Code Division Multiplex Access) werden orthogonale Codes verwendet, um Teilnehmerstationen und/oder Übertragungskanäle unterscheiden zu können. Orthogonale Codes sind beispielsweise so genannte OVSF-Codes (OVSF: Orthogonal Variable Spreading Factor), wie sie beispielsweise in dem 3GPP (3rd Generation Partnership Project) Standarddokument TS 25.213 V5.5.0 (2003-12) in Kapitel 4.3.1.1 beschrieben sind. Orthogonale Codes können, wie für die OVSF-Codes in dem zuvor genannten Standarddokument in Figur 4 gezeigt, in Form eines Codebaums dargestellt werden. Jede Ebene des Codebaums entspricht einem Spreizfaktor und weist so viele Äste auf, wie der Zahlenwert des Spreizfaktors. Bei einem Spreizfaktor von 4 weist die entsprechende Ebene des Codebaums beispielsweise vier Äste auf und die den Ästen entsprechenden Codes haben jeweils eine Länge von vier Bit. Bei einem Spreizfaktor von 16 weist die entsprechende Ebene sechzehn Äste auf und die Codes haben jeweils eine Länge von sechzehn Bit.

Je nach dem, welche Kombination von Codes eine Teilnehmerstation oder eine Funkstation gleichzeitig für Datenübertragungen verwendet, ergibt sich für die Sendeleistung ein jeweiliges maximal auftretendes Signal-to-Average Verhältnis (PAR: Peak-to-Average Ratio). Das Signal-to-Average Verhältnis der Sendeleistung gibt das Verhältnis eines momentanen Wertes der Sendeleistung zum zeitlichen Mittelwert der Sendeleistung an.

Gemäß dem 3GPP-Standard TS 25.433 V5.9.0 (2004-06), Kapitel 9.2.2.18F, müssen Funkstationen beispielsweise aufeinander folgende Codes für Übertragungen mittels HSDPA (High Speed Downlink Packet Access) verwenden. Dies bedeutet, dass die von einer Funkstation verwendbaren Codes in der dem gewähltem Spreizfaktor entsprechenden Ebene des Codebaums lückenlos nebeneinander liegenden Ästen entsprechen müssen. Die Funkstationen sind daher von den Herstellern derart zu konfigurieren, dass sie für jede mögliche Kombination von Codes immer das entsprechende maximal mögliche Signal-to-Average Verhältnis einhalten können. Dies bedeutet, dass das der größte mögliche Wert des Signal-to-Average Verhältnis festlegt, wie für eine Funkstation ein jeweiliger Sendeleistungsverstärker zu dimensionieren ist. Da auch Teilnehmerstationen für Übertragungen in Aufwärtsrichtung (uplink) mehrere Codes verwenden können, ergeben sich auch für Teilnehmerstationen verschiedenen Kombinationen von Codes. Auch für Teilnehmerstationen ist daher ein Sendeleistungsverstärker so zu dimensionieren, dass ein maximal mögliches Signal-to-Average Verhältnis eingehalten werden kann.

Es ist daher Aufgabe der Erfindung ein Verfahren zum Zuweisen von Codes für Datenübertragungen zwischen einer Funkstation und einer Teilnehmerstation eines Funkkommunikationssystems über eine Luftschnittstelle sowie eine netzseitige Einrichtung und eine Funkstation anzugeben, durch die ermöglicht wird, dass die zugewiesenen Codes zeitlich derart belegt (engl.: scheduled) werden können, dass das Signal-to-Average Verhältnis der Teilnehmerstation und/oder der Funkstation geringer ist, als ein maximal möglicher Wert, der bei beliebiger Zuweisung oder Belegung der Codes durch die Teilnehmerstation und/oder die Funkstation auftreten kann.

Diese Aufgabe wird mit dem Verfahren sowie der netzseitigen Einrichtung und der Funkstation gemäß den unabhängigen Ansprüchen gelöst.

Vorteilhafte Ausgestaltungen und Weiterbildungen der Erfindung sind Gegenstand der abhängigen Ansprüche.

Bei dem erfindungsgemäßen Verfahren zum Zuweisen von Codes für Datenübertragungen zwischen einer Funkstation und wenigstens einer Teilnehmerstation über eine Luftschnittstelle eines Funkkommunikationssystems, liegt eine Anzahl von M Codes zur Zuweisung vor, wobei jeder der M Codes als ein Ast einer gleichen Ebene eines Codebaums darstellbar ist, so dass eine erste Hälfte der Äste aus einem ersten Mutterast und eine zweite Hälfte der Äste aus einem zweiten Mutterast hervorgeht, weist eine netzseitige Einrichtung der Funkstation von den M Codes eine Anzahl von N Codes derart zu, dass die den N Codes bei Darstellung in der Ebene entsprechenden Äste lückenlos nebeneinander liegen und es gilt: N ist größer oder gleich Zwei, N >= 2, und M ist größer oder gleich Zwei multipliziert mit N, M >= 2*N. Erfindungsgemäß gehen von den Ästen, die den N Codes bei Darstellung in der Ebene entsprechen N/2 Äste aus dem ersten Mutterast und N/2 Äste aus dem zweiten Mutterast hervor, falls N eine gerade Zahl ist oder es gehen (N-1)/2 Äste aus dem ersten Mutterast und (N+1)/2 Äste aus dem zweiten Mutterast hervor, falls N eine ungerade Zahl ist.

Durch die erfindungsgemäße Zuweisung von Codes an die Funkstation wird ermöglicht, dass der Funkstation für eine bestimmte Anzahl zugewiesener Codes eine möglichst gleich große Anzahl von Codes, die aus dem ersten Mutterast, der einem ersten Muttercode entspricht, und aus einem zweiten Mutterast, der einem zweiten Muttercode entspricht, hervorgehen, zur Belegung (engl.: scheduling), d.h. zum zeitgleichen Verwenden, zur Verfügung steht. Auf diese Weise wird sichergestellt, dass für eine bestimmte Anzahl zugewiesener Codes eine möglichst große Anzahl von Codes gemäß den nachfolgend beschriebenen erfindungsgemäßen Verfahren zum Belegen von Codes verwendet werden kann.

Das "Hervorgehen eines Astes aus einem Mutterast" bedeutet in dieser Anmeldung, dass die den Codes entsprechenden Äste durch eine Verästelung des entsprechenden Mutterastes "entstehen". Mathematisch bedeutet dies, dass die Codes aus dem entsprechenden Muttercode durch gegebenenfalls wiederholtes Anwenden einer Rechenvorschrift berechnet werden.

Nachfolgend wird sowohl von lückenlos nebeneinander liegenden Codes als auch von lückenlos nebeneinander liegenden Ästen gesprochen. Diese Formulierungen beschreiben den gleichen Sachverhalt und sind daher für diese Anmeldung als synonym zu betrachten.

Bei dem erfindungsgemäßen Verfahren zum Belegen von Codes für Datenübertragungen zwischen einer Funkstation und wenigstens einer Teilnehmerstation über eine Luftschnittstelle eines Funkkommunikationssystems, liegen der Funkstation eine Anzahl von N aus M Codes zum Belegen vor, wobei jeder der M Codes als ein Ast einer gleichen Ebene eines Codebaums darstellbar ist, so dass eine erste Hälfte der Äste aus einem ersten Mutterast und eine zweite Hälfte der Äste aus einem zweiten Mutterast hervorgeht und es gilt: N ist größer oder gleich Zwei, N >= 2, und M ist größer oder gleich Zwei multipliziert mit N, M >= 2*N. Erfindungsgemäß belegt die Funkstation eine Anzahl K, mit K >= 2, der N Codes für zeitgleiche Datenübertragungen zwischen der Funkstation und Teilnehmerstationen, so dass jeder Code nur einmal belegt wird und von den Ästen, die den K Codes bei Darstellung in der Ebene entsprechen K/2 Äste aus dem ersten Mutterast und K/2 Äste aus dem zweiten Mutterast hervorgehen, falls K eine gerade Zahl ist, oder (K-1)/2 Äste aus dem ersten Mutterast und (K+1)/2 Äste aus dem zweiten Mutterast hervorgehen, falls K eine ungerade Zahl ist.

Die Erfinder haben erkannt, dass eine in der oben beschriebenen Weise durchgeführte Belegung von Codes dazu führt, dass die Funkstation und oder die Teilnehmerstationen ein im Vergleich zu anderen möglichen Kombinationen von Codes geringeres Signal-to-Average Verhältnis haben. Bei einer derartigen Ausführung der Belegung von Codes kann ein jeweiliger Sendeleistungsverstärker der Funkstation und/oder der Teilnehmerstationen geringeren technischen Anforderungen, beispielsweise hinsichtlich der Linearität, genügen. Dies ist für einen Hersteller der Funkstation und/oder der Teilnehmerstationen mit einer Verringerung der Herstellungskosten verbunden.

Bei einem weiteren erfindungsgemäßen Verfahren wird in einem ersten Schritt das zuvor beschriebene erfindungsgemäße Verfahren zum Zuweisen durchgeführt und einem zweiten Schritt, der zeitlich nach dem ersten Schritt erfolgt, wird das zuvor beschriebene erfindungsgemäße Verfahren zum Belegen durchgeführt.

Der Vorteil liegt darin, dass durch die erfindungsgemäße Zuweisung von Codes alle zugewiesenen Codes lückenlos nebeneinander liegenden Ästen entsprechen und somit für das erfindungsgemäße Verfahren zum Belegen von Codes verwendet werden können.

In einer Weiterbildung der Erfindung erfolgt die Belegung der K Codes derart, dass die den K Codes entsprechenden Äste hinsichtlich jeder Teilnehmerstation lückenlos nebeneinander liegen.

Da die Struktur des Codebaums bekannt und eindeutig ist, genügt es auf diese Weise, den Teilnehmerstationen jeweils einen Startcode und einen Endcode oder einen Startcode und eine Anzahl der für die entsprechende Teilnehmerstation belegten Codes zu signalisieren. Die Teilnehmerstationen können sich aus diesen Informationen selbst die jeweiligen einzelnen belegten Codes ermitteln. Bei einem nicht lückenlosen Nebeneinanderliegen der den belegten Codes entsprechenden Äste muss im ungünstigsten Fall jeder Teilnehmerstation jeder Code signalisiert werden. Dies erhöht zwar die Signalisierungslast, beeinträchtigt aber selbstverständlich nicht das erfindungsgemäße Belegungsverfahren.

Eine weitere Ausgestaltung der Erfindung sieht vor, dass die Belegung von Codes für wenigstens eine Teilnehmerstation beendet wird und für die übrigen Teilnehmerstationen eine bestehende Belegung von Codes durch erneute Anwendung des zuvor beschriebenen erfindungsgemäßen Verfahrens zum Belegen von Codes geändert wird. Von Vorteil ist, wenn in diesem Fall die den verwendeten Codes entsprechenden Äste hinsichtlich der übrigen Teilnehmerstationen lückenlos nebeneinander liegen.

Auf diese Weise wird erreicht, dass eine erfindungsgemäße Gleichverteilung der Belegung der Codes auf Codes, die Ästen entsprechen, die aus dem ersten und dem zweiten Mutterast hervorgehen, wiederhergestellt wird, falls wenigstens eine der Teilnehmerstationen keine Daten mehr empfängt oder sendet, d.h. falls die Belegung von Codes wenigstens einer Teilnehmerstation beendet wird.

Die erfindungsgemäße netzseitige Einrichtung und die erfindungsgemäße Funkstation weisen alle Merkmale auf, die zur Durchführung des entsprechenden erfindungsgemäßen Verfahrens benötigt werden. Insbesondere können entsprechende Mittel zur Durchführung der einzelnen Verfahrensschritte oder Verfahrensvarianten vorgesehen sein.

Die Erfindung wird im Folgenden anhand von in den Figuren dargestellten Ausführungsbeispielen näher erläutert. Es zeigen:
- Fig. 1: einen Ausschnitt eines Codebaums für OVSF-Codes gemäß 3GPP TS 25.213 V5.5.0 (2003-12),
- Fig. 2: eine schematische Darstellung einer erfindungsgemäßen Zuweisung sowie einer erfindungsgemäßen Belegung von Codes für Codes gemäß Fig. 1.

Gleiche Bezugszeichen in den Figuren bezeichnen gleiche Gegenstände.

Eine Teilnehmerstation ist beispielsweise ein Mobilfunkendgerät, insbesondere ein Mobiltelefon oder auch eine ortsbewegliche oder ortsfeste Vorrichtung zur Übertragung von Bild-und/oder Tondaten, zum Fax-, Short Message Service SMS-, Multimedia Messaging Service MMS- und/oder Email-Versand und/oder zum Internet-Zugang.

Eine Funkstation, beispielsweise eine Basisstation, ist eine netzseitige Einrichtung, die über eine Luftschnittstelle von einer Teilnehmerstation Nutz- und/oder Signalisierungsdaten empfängt und/oder Nutz- und/oder Signalisierungsdaten an die Teilnehmerstation sendet.

Eine Funkstation ist über weitere netzseitige Einrichtungen mit einem Kernnetz verbunden, über das Verbindungen in andere Funkkommunikationssysteme oder in andere Datennetze erfolgen. Unter einem Datennetz ist beispielsweise das Internet oder ein Festnetz mit beispielsweise leitungsvermittelten oder paketvermittelten Verbindungen für z.B. Sprache und/oder Daten zu verstehen.

Zu den weiteren Netzseitigen Einrichtungen gehört beispielsweise auch ein Funknetzkontroller, welcher der Funkstation Ressourcen, beispielsweise in Form von Codes, für Datenübertragungen zuweist.

Die Erfindung kann vorteilhaft in beliebigen Funkkommunikationssystemen mit einer CDMA-Komponente verwendet werden. Unter Funkkommunikationssystemen sind Systeme zu verstehen, in denen eine Datenübertragung zwischen Teilnehmerstationen und Funkstationen über eine Luftschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM-(Global System for Mobile Communications) oder dem UMTS-(Universal Mobile Telecommunications System) Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of Electrical and Electronics Engineers) 802.11a-i, HiperLAN1 und HiperLAN2 (HiperLAN: high performance radio local area network) sowie Bluetooth-Netze und Breitbandnetze mit drahtlosem Zugang beispielsweise gemäß IEEE 802.16.

Im Folgenden wird die Erfindung am Beispiel eines Mobilfunksystems nach dem UMTS-Standard beschrieben, ohne jedoch damit zum Ausdruck bringen zu wollen, dass die Erfindung hierauf beschränkt sein soll.

Nachfolgend wird als Funkstation eine Basisstation betrachtet, ohne jedoch damit zum Ausdruck bringen zu wollen, dass die Erfindung hierauf beschränkt sein soll.

Nachfolgend wird als netzseitige Einrichtung ein Funknetzkontroller (RNC: Radio Network Controller) betrachtet, ohne jedoch damit zum Ausdruck bringen zu wollen, dass die Erfindung hierauf beschränkt sein soll.

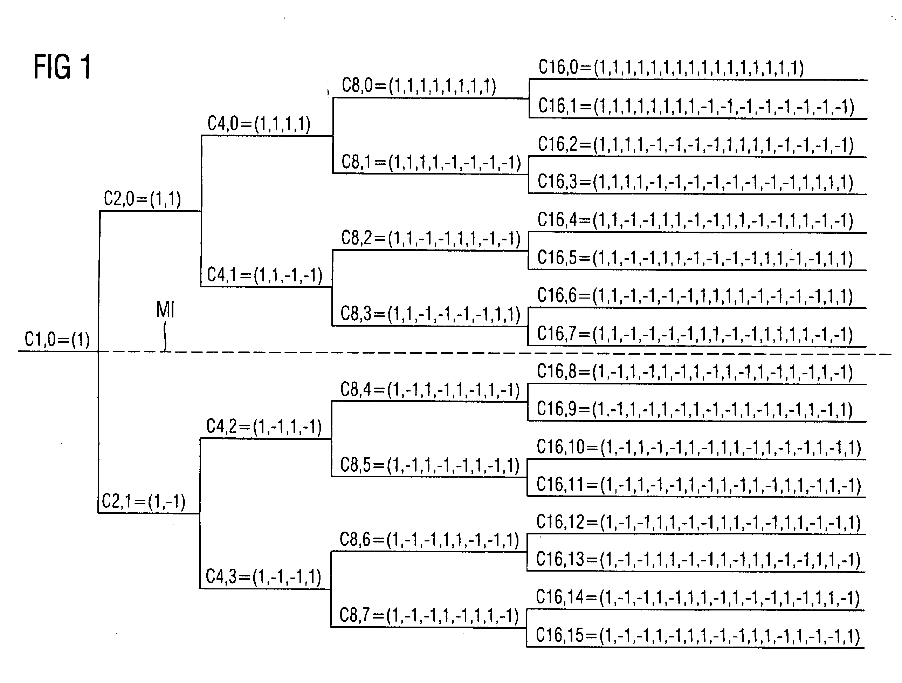

Figur 1 zeigt schematisch eine Darstellung eines Codebaums von OVSF-Codes gemäß dem UMTS-Standard 3GPP TS 25.213 V5.5.0 (2003-12). Gezeigt werden Codes mit Spreizfaktor 1, 2, 4, 8 und 16. Höhere Spreizfaktoren sind aus Gründen der Übersichtlichkeit nicht dargestellt. Jede Ebene des Codebaums weist Codes mit einem gleichen Wert des Spreizfaktors auf. Der Spreizfaktor gibt an, aus wie vielen Bits die Codes der entsprechenden Ebene bestehen.

Die Codes werden in Figur 1 durch Bezugszeichen der Form Cn,k, mit n dem Wert des Spreizfaktors und k der Nummer des Codes mit 0 ≤ k ≤ n-1. Die Codes jeder Ebene des Codebaums, das heißt die Codes mit einem bestimmten Spreizfaktor, können gemäß der in Kapitel 4.3.1.1 des oben genannten UMTS-Standards angegebenen Rechenvorschrift aus der vorhergehenden Ebene, d.h. aus den Codes mit dem nächst kleineren Spreizfaktor berechnet werden. In der zweiten Ebene des Codebaums, d.h. mit einem Spreizfaktor von n=2 steht ein erster Code C2,0 auf einem als erster Mutterast bezeichneten Ast und ein zweiter Code C2,1 auf einem als zweiter Mutterast bezeichneten Ast. Von den Ästen, die Codes höherer Ebenen entsprechen, d.h. Ebenen mit Spreizfaktoren 4, 8, 16 sowie mit höheren Spreizcodes, geht die erste Hälfte der Äste aus dem ersten Mutterast hervor, während die zweite Hälfte der Äste aus dem zweiten Mutterast hervorgeht. Der Codebaum besteht sozusagen aus zwei Hälften, die in Figur 1 durch eine gestrichelte Linie MI getrennt werden. Auf der einen Seite der gestrichelten Linie MI liegen diejenigen Äste, d.h. die entsprechenden Codes, die aus dem ersten Mutterast, d. h. aus dem ersten Code C2,0 hervorgehen. Auf der anderen Seite der gestrichelten Linie MI liegen diejenigen Äste, d.h. diejenigen Codes, die aus dem zweiten Mutterast, d.h. aus dem zweiten Code C2,1 hervorgehen.

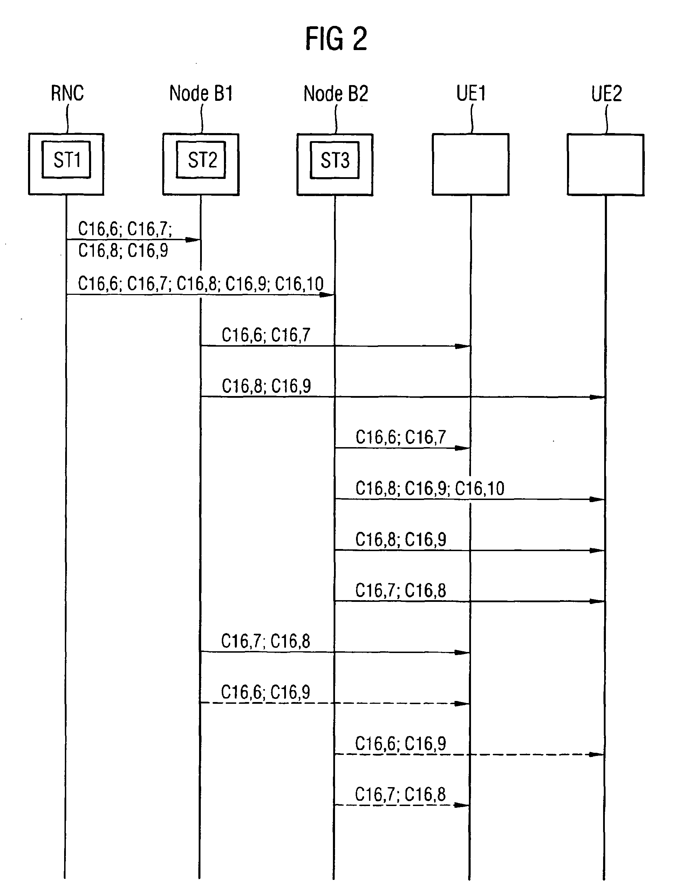

Figur 2 zeigt schematisch ein erfindungsgemäßes Zuweisen und Belegen von Codes für den Spreizfaktor 16. Das Zuweisen und Belegen der Codes ist durch entsprechende Pfeile und die Angabe der Bezugszeichen der zugewiesenen und der belegten Codes dargestellt. Aus Gründen der Übersichtlichkeit wurden die an einem Pfeil angeordneten Codes durch Semikola separiert. Selbstverständlich kann die Erfindung sowohl für geringere als auch für höhere Spreizfaktoren angewandt werden.

Zugewiesen und belegt werden die Codes in diesem Ausführungsbeispiel für Datenübertragungen von Funkstationen zu Teilnehmerstationen (downlink) mittels HSDPA, ohne jedoch damit zum Ausdruck bringen zu wollen, dass die Erfindung hierauf beschränkt sein soll. Selbstverständlich kann die Erfindung beispielsweise auch für MBMS Datenübertragungen (MBMS: Multimedia Broadcast Multicast Service) angewandt werden, oder um Teilnehmerstationen Codes für Übertragungen in Aufwärtsrichtung (uplink) zuzuweisen und/oder um die zugewiesenen Codes von der Teilnehmerstation belegen zu lassen.

Wird der Spreizfaktor 16 verwendet, hat ein Funknetzkontroller RNC die Möglichkeit alle 16 Codes, die in Figur 1 für den Spreizfaktor 16 dargestellt sind, einer ersten Basisstation NodeB1 und einer zweiten Basisstation NodeB2 zuzuweisen. Der Funknetzkontroller RNC weist in diesem Ausführungsbeispiel der ersten Basisstation NodeB1 vier Codes und der zweiten Basisstation NodeB2 fünf Codes zu. Gemäß der Erfindung liegen die zugewiesenen Codes lückenlos nebeneinander und symmetrisch zur gestrichelten Linie MI aus Figur 1. Dies ist gleichbedeutend damit, dass der Funknetzkontroller RNC, der ersten Basisstation NodeB1 die Codes C16,6, C16,7, C16,8 und C16,9 zuweist. Diese vier Codes C16,6, C16,7, C16,8, C16,9 liegen - wie aus Figur 1 ersichtlich - lückenlos nebeneinander und symmetrisch zur gestrichelten Linie MI. Eine symmetrisch Lage der Codes ist dahingehend zu verstehen, dass die Codes C16,6 und C16,7 auf Ästen liegen, die aus dem ersten Mutterast, d.h. aus dem ersten Code C2,0 hervorgehen, während die Codes C16,8 und C16,9 auf Ästen liegen, die aus dem zweitem Mutterast hervorgehen, dass heißt aus dem zweiten Code C2,1. Es liegt somit die gleiche Anzahl von Ästen auf jeder Seite der gestrichelten Linie MI.

Der zweiten Basisstation NodeB2 weist der Funknetzkontroller RNC fünf Codes zu. Diese werden so zugewiesen, dass sie lückenlos nebeneinander und möglichst symmetrisch um die gestrichelte Linie MI liegen. Der Funknetzkontroller RNC weist daher die Codes C16,6, C16,7, C16,8, C16,9 und C16,10 zu. Die gleiche möglichst symmetrische Lage relativ zur gestrichelten Linie MI hätte der Funknetzkontroller RNC für fünf Codes auch dadurch erreichen können, dass er der zweiten Basisstation NobeB2 anstelle des Codes C16,10 den Code C16,5 zuweist. "Möglichst symmetrisch" ist also dahingehend zu verstehen, dass sich die Anzahl von Ästen (Codes), die aus dem ersten Mutterast (ersten Code) hervorgehen von der Anzahl der Äste (Codes), die aus dem zweiten Mutterast (zweiten Code) hervorgehen nur um Eins unterscheidet.

Nachfolgend führen die erste Basisstation NodeB1 und die zweite Basisstation NodeB2 die zeitliche Belegung (engl.: scheduling) der ihnen durch den Funknetzkontroller RNC zugewiesenen Codes für eine erste Teilnehmerstation UE1 und eine zweiten Teilnehmerstation UE2 durch. Die Belegung der Codes für Datenübertragungen von der ersten Basisstation NodeB1 und der zweiten Basisstation NodeB2 an die erste Teilnehmerstation UE1 und die zweite Teilnehmerstation UE2 erfolgt wiederum symmetrisch zur gestrichelten Linie MI aus Figur 1 und vorzugsweise derart, dass für eine Teilnehmerstation benachbarte Codes, d.h. Codes nebeneinander liegender Äste, verwendet werden.

Die erste Basisstation NodeB1 belegt daher für eine gleichzeitige Datenübertragung mittels HSDPA an die erste und zweite Teilnehmerstation UE1, UE2 den Code C16,6 und den Code C16,7 für die erste Teilnehmerstation UE1 und den Code C16,8 und den Code C16,9 für die zweite Teilnehmerstation UE2.

Die zweite Basisstation NodeB2 belegt ebenfalls für eine gleichzeitige Datenübertragung mittels HSDPA an die erste und zweite Teilnehmerstation UE1, UE2 den Code C16,6 und den Code C16,7 für die erste Teilnehmerstation UE1 und die Codes C16,8, C16,9 und C16,10 für die zweite Teilnehmerstation UE2. Während die zweite Basisstation NodeB2 weiterhin unter Verwendung der Codes C16,6 und C16,7 an die erste Teilnehmerstation UE1 überträgt, ändert sie die Ressourcenbelegung für die zweite Teilnehmerstation UE2 in einen nächsten Schritt, da nun eine geringere Datenrate benötigt wird. Sie belegt daher nachfolgend nur noch die Codes C16,8 und C16,9 für die Datenübertragung mittels HSDPA an die zweite Teilnehmerstation UE2. Der nun unbelegte Code C16,10 kann beispielsweise für eine dritte, nicht dargestellte Teilnehmerstation verwendet werden.

Nachfolgend beendet die zweite Basisstation NodeB2 ihre Datenübertragung an die erste Teilnehmerstation UE1. Dadurch, dass die zweite Basisstation NodeB2 den Code C16,6 und den Code C16,7 nicht mehr verwendet, ist mit einer Belegung der Codes C16,8 und C16,9 für die zweite Teilnehmerstation UE2 eine symmetrische Belegung hinsichtlich der gestrichelten Linie MI nicht mehr gegeben. Um ihre Datenübertragung weiterhin mit einem möglichst geringen Signal-to-Average Verhältnis durchführen zu können, ändert die zweite Basisstation NodeB2 daher erfindungsgemäß die Belegung der Codes für die zweite Teilnehmerstation UE2 und verwendet nachfolgend zur Weiterführung der Datenübertragung den Code C16,7 zusammen mit dem Code C16,8. Der Code C16,6 wird ebenso wie der Code C16,9 von der zweiten Basisstation NodeB1 nicht mehr belegt. Die Codes C16,6 und C16,9 stehen daher zur erneuten Belegung zur Verfügung. Die erste Basisstation NodeB1 hat inzwischen ihre Datenübertragung an die zweite Teilnehmerstation UE2 beendet. Dadurch, dass die erste Basisstation NodeB1 den Code C16,8 und den Code C16,9 nicht mehr verwendet, ist mit einer Belegung der Codes C16,6 und C16,7 für die erste Teilnehmerstation UE1 eine symmetrische Belegung hinsichtlich der gestrichelten Linie MI nicht mehr gegeben. Um ihre Datenübertragung weiterhin mit einem möglichst geringen Signal-to-Average Verhältnis durchführen zu können, ändert die erste Basisstation NodeB1 daher erfindungsgemäß die Belegung der Codes für die erste Teilnehmerstation UE1 und verwendet nachfolgend zur Weiterführung der Datenübertragung den Code C16,7 zusammen mit dem Code C16,8. Der Code C16,6 wird ebenso wie der Code C16,9 von der ersten Basisstation NodeB1 nicht mehr belegt. Die Codes C16,6 und C16,9 stehen daher zur erneuten Belegung zur Verfügung.

Gemäß der Erfindung ist es auch vorgesehen, dass die Codes symmetrisch zur gestrichelten Linie MI belegt werden können, ohne dass die Codes dabei lückenlos nebeneinander liegen, d.h. auf benachbarten Ästen liegen müssen. Die erste Basisstation NodeB1 ändert daher in einem alternativen, durch einen gestrichelten Pfeil dargestellten Ausführungsbeispiel zur Fortsetzung der Datenübertragung an die erste Teilnehmerstation UE1 die Belegung der Codes von den Codes C16,6 und C16,7 auf die Codes C16,6 und C16,9. Die gleichen Codes belegt auch die zweite Basisstation NodeB2 für eine Fortsetzung der Datenübertragung an die zweite Teilnehmerstation UE2. Aufgrund dieser Belegung kann die zweite Basisstation NodeB2 nachfolgend die Codes C16,7 und C16,8 für eine erneute Datenübertragung an die erste Teilnehmerstation belegen. Für die erste Teilnehmerstation UE1 werden dadurch nebeneinander liegende Codes verwendet, ohne dass eine Erneute Änderung Ressourcenbelegung auch für die zweite Teilnehmerstation erfolgen muss.

Der Funknetzkontroller RNC verfügt über eine erste Steuereinheit ST1, mittels derer er eine erfindungsgemäße Zuweisung von Codes für Basisstationen durchführen kann. Die erste Basisstation NodeB1 verfügt über eine zweite Steuereinheit ST2 und die zweite Basisstation NodeB2 verfügt über eine dritte Steuereinheit ST3. Mittels ihrer Steuereinheiten ST2, ST3 können die erste Basisstation NodeB1 und die zweite Basisstation NodeB2 die zuvor beschriebene erfindungsgemäße Belegung der ihn zugewiesenen Codes für Datenübertragungen an die erste Teilnehmerstation UE2 und die zweite Teilnehmerstation UE2 durchführen.

In einem nicht dargestellten Ausführungsbeispiel weisen die erste Basisstation NodeB1 und die zweite Basisstation NodeB2 der ersten und der zweiten Teilnehmerstation UE1, UE2 Codes in gleicher Weise lückenlos nebeneinander liegend und symmetrisch zur gestrichelten Linie MI zu, wie dies für den Funknetzkontroller RNC hinsichtlich der ersten und zweiten Basisstation NodeB1, NodeB2 zuvor beschriebenen wurde. Nachfolgend belegen die erste Teilnehmerstation UE1 und die zweite Teilnehmerstation UE2 die ihnen zugewiesenen Codes ebenso symmetrisch zur gestrichelten Linie MI wie dies zuvor für die erste Basisstation NodeB1 und die zweite Basisstation NodeB2 beschrieben wurde.

## Patentansprüche

1. Verfahren zum Zuweisen von Codes für Datenübertragungen zwischen einer Funkstation (NodeB1, NodeB2) und wenigstens einer Teilnehmerstation (UE1, UE2) über eine Luftschnittstelle eines Funkkommunikationssystems, bei dem
- eine Anzahl von M Codes (C16,0, C16,1, C16,2, ..., C16,15) zur Zuweisung vorliegt, wobei jeder der M Codes (C16,0, C16,1, C16,2, ..., C16,15) als ein Ast einer gleichen Ebene eines Codebaums darstellbar ist, so dass eine erste Hälfte der Äste aus einem ersten Mutterast und eine zweite Hälfte der Äste aus einem zweiten Mutterast hervorgeht,
- eine netzseitige Einrichtung (RNC) der Funkstation (NodeB1, NodeB2) von den M Codes (C16,0, C16,1, C16,2, ..., C16,15) eine Anzahl von N Codes (C16,6, C16,7, C16,8, C16,9, C16,10) derart zuweist, dass die den N Codes (C16,6, C16,7, C16,8, C16,9, C16,10) bei Darstellung in der Ebene entsprechenden Äste lückenlos nebeneinander liegen,
- und gilt N ist größer oder gleich Zwei, N >= 2, und M ist größer oder gleich Zwei multipliziert mit N, M >= 2*N,
**dadurch gekennzeichnet,**
**dass** von den Ästen, die den N Codes (C16,6, C16,7, C16,8, C16,9, C16,10) bei Darstellung in der Ebene entsprechen,
- N/2 Äste aus dem ersten Mutterast und N/2 Äste aus dem zweiten Mutterast hervorgehen, falls N eine gerade Zahl ist,
- oder (N-1)/2 Äste aus dem ersten Mutterast und (N+1)/2 Äste aus dem zweiten Mutterast hervorgehen, falls N eine ungerade Zahl ist.

2. Verfahren zum Belegen von Codes für Datenübertragungen zwischen einer Funkstation (NodeB1, NodeB2) und wenigstens einer Teilnehmerstation (UE1, UE2) über eine Luftschnittstelle eines Funkkommunikationssystems, bei dem,
- der Funkstation (NodeB1, NodeB2) eine Anzahl (C16,6, C16,7, C16,8, C16,9, C16,10) von N aus M Codes (C16,0, C16,1, C16,2, ..., C16,15) zum Belegen vorliegen, wobei jeder der M Codes (C16,0, C16,1, C16,2, ..., C16,15) als ein Ast einer gleichen Ebene eines Codebaums darstellbar ist, so dass eine erste Hälfte der Äste aus einem ersten Mutterast und eine zweite Hälfte der Äste aus einem zweiten Mutterast hervorgeht,
- und gilt N ist größer oder gleich Zwei, N >= 2, und M ist größer oder gleich Zwei multipliziert mit N, M >= 2*N,
**dadurch gekennzeichnet,**
**dass** die Funkstation (NodeB1, NodeB2) eine Anzahl K, mit K >= 2, der N Codes (C16,6, C16,7, C16,8, C16,9, C16,10) für zeitgleiche Datenübertragungen zwischen der Funkstation und Teilnehmerstationen (UE1, UE2) belegt, so dass jeder Code (C16,6, C16,7, C16,8, C16,9, C16,10) nur einmal belegt wird und von den Ästen, die den K Codes (C16,6, C16,7, C16,8, C16,9, C16,10) bei Darstellung in der Ebene entsprechen
- K/2 Äste aus dem ersten Mutterast und K/2 Äste aus dem zweiten Mutterast hervorgehen, falls K eine gerade Zahl ist,
- oder (K-1)/2 Äste aus dem ersten Mutterast und (K+1)/2 Äste aus dem zweiten Mutterast hervorgehen, falls K eine ungerade Zahl ist.

3. Verfahren zum Durchführen des Verfahrens gemäß Anspruch 1 in einem ersten Schritt und zum Durchführen des Verfahrens gemäß Anspruch 2 in einem zweiten Schritt, der zeitlich nach dem ersten Schritt erfolgt.

4. Verfahren nach einem der Ansprüche 2 oder 3,
**dadurch gekennzeichnet,**
**dass** die den K Codes (C16,6, C16,7, C16,8, C16,9, C16,10) entsprechenden Äste hinsichtlich jeder Teilnehmerstation (UE1, UE2) lückenlos nebeneinander liegen.

5. Verfahren nach Anspruch 4,
**dadurch gekennzeichnet;**
**dass** die Belegung von Codes (C16,6, C16,7; C16,8, C16,9) für wenigstens eine Teilnehmerstation (UE1; UE2) beendet wird und für die übrigen Teilnehmerstationen (UE2; UE1) eine bestehende Belegung von Codes (C16,8, C16,9; C16,6, C16,7) durch erneute Anwendung des Verfahrens gemäß Anspruch 4 geändert wird.

6. Netzseitige Einrichtung (RNC) für ein Funkkommunikationssystem
- mit Mitteln (ST1) zum Vorhalten einer Anzahl von M Codes (C16,0, C16,1, C16,2, ..., C16,15), wobei jeder der M Codes (C16,0, C16,1, C16,2, ..., C16,15) als ein Ast einer gleichen Ebene eines Codebaums darstellbar ist, so dass eine erste Hälfte der Äste aus einem ersten Mutterast und eine zweite Hälfte der Äste aus einem zweiten Mutterast hervorgeht,
- mit Mitteln (ST1) zum Zuweisen von Codes für Datenübertragungen zwischen einer Funkstation (NodeB1, NodeB2) und wenigstens einer Teilnehmerstation (UE1, UE2) über eine Luftschnittstelle derart, dass der Funkstation (NodeB1, NodeB2) von den M Codes (C16,0, C16,1, C16,2, ..., C16,15) eine Anzahl von N Codes (C16,6, C16,7, C16,8, C16,9, C16,10) zugewiesen wird, so dass die den N Codes (C16,6, C16,7, C16,8, C16,9, C16,10) bei Darstellung in der Ebene entsprechenden Äste lückenlos nebeneinander liegen, wobei gilt N ist größer oder gleich Zwei, N >= 2, und M ist größer oder gleich Zwei multipliziert mit N, M >= 2*N,
**dadurch gekennzeichnet,**
**dass** die Mittel (ST1) zum Zuweisen so ausgebildet sind, dass von den Ästen, die den N Codes (C16,6, C16,7, C16,8, C16,9, C16,10) bei Darstellung in der Ebene entsprechen,
- N/2 Äste aus dem ersten Mutterast und N/2 Äste aus dem zweiten Mutterast hervorgehen, falls N eine gerade Zahl ist,
- oder (N-1)/2 Äste aus dem ersten Mutterast und (N+1)/2 Äste aus dem zweiten Mutterast hervorgehen, falls N eine ungerade Zahl ist.

7. Funkstation (NodeB1, NodeB2) für ein Funkkommunikationssystem,
- mit Mitteln (ST2, ST3) zum Belegen von Codes für Datenübertragungen zwischen der Funkstation (NodeB1, NodeB2) und wenigstens einer Teilnehmerstation (UE1, UE2) über eine Luftschnittstelle, wobei zum Belegen eine Anzahl von N (C16,6, C16,7, C16,8, C16,9, C16,10) aus M Codes (C16,0, C16,1, C16,2, ..., C16,15) vorliegt und wobei jeder der M Codes (C16,0, C16,1, C16,2, ..., C16,15) als ein Ast einer gleichen Ebene eines Codebaums darstellbar ist, so dass eine erste Hälfte der Äste aus einem ersten Mutterast und eine zweite Hälfte der Äste aus einem zweiten Mutterast hervorgeht, wobei gilt N ist größer oder gleich Zwei, N >= 2, und M ist größer oder gleich Zwei multipliziert mit N, M >= 2*N,
**dadurch gekennzeichnet,**
**dass** die Mittel (ST2, ST3) zum Belegen derart ausgebildet sind, dass eine Anzahl K, mit K >= 2, der N Codes (C16,6, C16,7, C16,8, C16,9, C16,10) für zeitgleiche Datenübertragungen zwischen der Funkstation (NodeB1, NodeB2) und Teilnehmerstationen (UE1, UE2) belegt wird, so dass jeder Code (C16,6, C16,7, C16,8, C16,9, C16,10) nur einmal belegt wird und von den Ästen, die den K Codes (C16,6, C16,7, C16,8, C16,9, C16,10) bei Darstellung in der Ebene entsprechen
- K/2 Äste aus dem ersten Mutterast und K/2 Äste aus dem zweiten Mutterast hervorgehen, falls K eine gerade Zahl ist,
- oder (K-1)/2 Äste aus dem ersten Mutterast und (K+1)/2 Äste aus dem zweiten Mutterast hervorgehen, falls K eine ungerade Zahl ist.

8. Funkstation (NodeB1, NodeB2) nach Anspruch 7,
**dadurch gekennzeichnet,**
**dass** die Mittel (ST2, ST3) zum Belegen derart ausgebildet sind, dass die den K Codes (C16,6, C16,7, C16,8, C16,9, C16,10) entsprechenden Äste hinsichtlich jeder Teilnehmerstation (UE1, UE2) lückenlos nebeneinander liegen.

9. Funkstation (NodeB1, NodeB2) nach Anspruch 8,
**dadurch gekennzeichnet,**
**dass** die Mittel (ST2, ST3) zum Belegen derart ausgebildet sind, dass sie nach dem Beenden der Belegung von Codes (C16,6, C16,7; C16,8, C16,9) für wenigstens eine Teilnehmerstation (UE1; UE2) für die übrigen Teilnehmerstationen (UE2; UE1) eine bestehende Belegung von Codes (C16,8, C16,9; C16,6, C16,7) durch erneute Anwendung des Verfahrens gemäß Anspruch 4 ändert.

## Claims

1. Method for assigning codes for data transmissions between a radio station (NodeB1, NodeB2) and at least one subscriber station (UE1, UE2) via an air interface in a radio communication system, in which
- a number of M codes (C16,0, C16,1, C16,2, ..., C16,15) is available for assignment, each of the M codes (C16,0, C16,1, C16,2, ..., C16,15) being able to be represented as a branch on the same level of a code tree, so that a first half of the branches comes from a first mother branch and a second half of the branches comes from a second mother branch,
- a network-end device (RNC) in the radio station (NodeB1, NodeB2) assigns a number of N codes (C16,6, C16,7, C16,8, C16,9, C16,10) from the M codes (C16,0, C16, 1, C16,2, ..., C16,15) such that the branches corresponding to the N codes (C16,6, C16,7, C16,8, C16,9, C16,10) upon representation on the level are situated next to one another without any gaps,
- and it holds that N is greater than or equal to two, N ≥ 2, and M is greater than or equal to two multiplied by N, M ≥ 2*N,
**characterized**
**in that** of the branches corresponding to the N codes (C16,6, C16,7, C16,8, C16,9, C16,10) upon representation on the level,
- N/2 branches come from the first mother branch and N/2 branches come from the second mother branch if N is an even number,
- or (N-1)/2 branches come from the first mother branch and (N+1) /2 branches come from the second mother branch if N is an uneven number.

2. Method for reserving codes for data transmissions between a radio station (NodeB1, NodeB2) and at least one subscriber station (UE1, UE2) via an air interface in a radio communication system, in which
- the radio station (NodeB1, NodeB2) has a number (C16,6, C16,7, C16,8, C16,9, C16,10) of N out of M codes (C16,0, C16,1, C16,2, ..., C16,15) available for reservation, each of the M codes (C16,0, C16,1, C16,2, ..., C16,15) being able to be represented as a branch on the same level of a code tree, so that a first half of the branches comes from a first mother branch and a second half of the branches comes from a second mother branch,
- and it holds that N is greater than or equal to two, N ≥ 2, and M is greater than or equal to two multiplied by N, M ≥ 2*N,
**characterized**
**in that** the radio station (NodeB1, NodeB2) reserves a number K, where K ≥ 2, of the N codes (C16,6, C16,7, C16,8, C16,9, C16,10) for simultaneous data transmissions between the radio station and subscriber stations (UE1, UE2), so that each code (C16,6, C16,7, C16,8, C16,9, C16,10) is reserved only once and of the branches corresponding to the K codes (C16,6, C16,7, C16,8, C16,9, C16,10) upon representation on the level,
- K/2 branches come from the first mother branch and K/2 branches come from the second mother branch if K is an even number,
- or (K-1)/2 branches come from the first mother branch and (K+1)/2 branches come from the second mother branch if K is an uneven number.

3. Method for carrying out the method according to Claim 1 in a first step and for carrying out the method according to Claim 2 in a second step, which comes after the first step chronologically.

4. Method according to one of Claims 2 and 3,
**characterized**
**in that** the branches corresponding to the K codes (C16,6, C16,7, C16,8, C16,9, C16,10) are situated next to one another without any gaps in respect of each subscriber station (UE1, UE2).

5. Method according to Claim 4,
**characterized**
**in that** the reservation of codes (C16,6, C16,7; C16,8, C16,9) is terminated for at least one subscriber station (UE1; UE2), and an existing reservation of codes (C16,8, C16,9; C16,6, C16,7) is changed for the other subscriber stations (UE2; UE1) by fresh application of the method according to Claim 4.

6. Network-end device (RNC) for a radio communication system
- having means (ST1) for holding a number of M codes (C16,0, C16,1, C16,2, ..., C16,15), each of the M codes (C16,0, C16,1, C16,2, ..., C16,15) being able to be represented as a branch on the same level of a code tree, so that a first half of the branches comes from a first mother branch and a second half of the branches comes from a second mother branch,
- having means (ST1) for assigning codes for data transmissions between a radio station (NodeB1, NodeB2) and at least one subscriber station (UE1, UE2) via an air interface such that the radio station (NodeB1, NodeB2) is assigned a number of N codes (C16,6, C16,7, C16,8, C16,9, C16,10) from the M codes (C16,0, C16,1, C16,2, ..., C16,15), so that the branches corresponding to the N codes (C16,6, C16,7, C16,8, C16,9, C16,10) upon representation on the level are situated next to one another without any gaps, where it holds that N is greater than or equal to two, N ≥ 2, and M is greater than or equal to two multiplied by N, M ≥ 2*N,
**characterized**
**in that** the assignment means (ST1) are in a form such that of the branches corresponding to the N codes ((C16,6, C16,7, C16,8, C16,9, C16,10) upon representation on the level,
- N/2 branches come from the first mother branch and N/2 branches come from the second mother branch if N is an even number,
- or (N-1)/2 branches come from the first mother branch and (N+1) /2 branches come from the second mother branch if N is an uneven number.

7. Radio station (NodeB1, NodeB2) for a radio communication system,
- having means (ST2, ST3) for reserving codes for data transmissions between the radio station (NodeB1, NodeB2) and at least one subscriber station (UE1, UE2) via an air interface, where a number of N (C16,6, C16,7, C16,8, C16,9, C16,10) out of M codes (C16,0, C16,1, C16,2,..., C16,15) is available for reservation and where each of the M codes (C16,0, C16,1, C16,2,..., C16,15) can be represented as a branch on the same level of a code tree, so that a first half of the branches comes from a first mother branch and a second half of the branches comes from a second mother branch, where it holds that N is greater than or equal to two, N >= 2, and M is greater than or equal to two multiplied by N, M >= 2*N,
**characterized**
**in that** the reservation means (ST2, ST3) are in a form such that a number K, where K >= 2, of the N codes (C16,6, C16,7, C16,8, C16,9, C16,10) is reserved for simultaneous data transmissions between the radio station (NodeB1, NodeB2) and subscriber stations (UE1, UE2), so that each code (C16,6, C16,7, C16,8, C16,9, C16,10) is reserved only once, and of the branches corresponding to the K codes (C16,6, C16,7, C16,8, C16,9, C16,10) upon representation on the level,
- K/2 branches come from the first mother branch and K/2 branches come from the second mother branch if K is an even number,
- or (K-1)/2 branches come from the first mother branch and (K+1)/2 branches come from the second mother branch if K is an uneven number.

8. Radio station (NodeB1, NodeB2) according to Claim 7,
**characterized**
**in that** the reservation means (ST2, ST3) are in a form such that the branches corresponding to the K codes (C16,6, C16,7, C16,8, C16,9, 16,10) are situated next to one another without any gaps in respect of each subscriber station (UE1, UE2).

9. Radio station (NodeB1, NodeB2) according to Claim 8,
**characterized**
**in that** the reservation means (ST2, ST3) are in a form such that, following termination of the reservation of codes (C16,6, C16,7; C16,8, C16,9) for at least one subscriber station (UE1; UE2), they change an existing reservation of codes (C16,8, C16,9; C16,6, C16,7) for the other subscriber stations (UE2; UE1) by fresh application of the method according to Claim 4.

## Revendications

1. Procédé d'allocation de codes pour des transmissions de données entre une station radio (NodeB1, NodeB2) et au moins une station d'usager (UE1, UE2) via une interface aérienne d'un système de radiocommunication, dans lequel
- on a un nombre de M codes (C16,0, C16,1, C16,2, ..., C16,15) à allouer, chacun des M codes (C16,0, C16,1, C16,2, ..., C16,15) pouvant être représenté sous la forme d'une branche d'un même niveau d'un arbre de codes de sorte qu'une première moitié des branches part d'une première branche mère et qu'une deuxième moitié des branches part d'une deuxième branche mère,
- un dispositif côté réseau (RNC) de la station radio (NodeB1, NodeB2) alloue un nombre de N codes (C16,6, C16,7, C16,8, C16,9, C16,10) des M codes (C16,0, C16,1, C16,2, ..., C16,15) de manière telle que les branches correspondant aux N codes (C16,6, C16,7, C16,8, C16,9, C16,10) dans le cas d'une représentation dans le niveau sont adjacentes sans discontinuité, et
- on a N supérieur ou égal à deux, N >= 2, et M supérieur ou égal à deux multiplié par N, M >= 2*N,
**caractérisé en ce que**, des branches qui correspondent aux N codes (C16,6, C16,7, C16,8, C16,9, C16,10) dans le cas d'une représentation dans le niveau,
- N/2 branches partent de la première branche mère et N/2 branches partent de la deuxième branche mère si N est un nombre pair ou
- (N-1)/2 branches partent de la première branche mère et (N+1)/2 branches partent de la deuxième branche mère si N est un nombre impair.

2. Procédé d'ordonnancement de codes pour des transmissions de données entre une station radio (NodeB1, NodeB2) et au moins une station d'usager (UE1, UE2) via une interface aérienne d'un système de radiocommunication, dans lequel
- la station radio (NodeB1, NodeB2) dispose d'un nombre (C16,6, C16,7, C16,8, C16,9, C16,10) de N de M codes (C16,0, C16, 1, C16,2, ..., C16,15) à ordonnancer, chacun des M codes (C16,0, C16, 1, C16,2, ..., C16,15) pouvant être représenté sous la forme d'une branche d'un même niveau d'un arbre de codes de sorte qu'une première moitié des branches part d'une première branche mère et qu'une deuxième moitié des branches part d'une deuxième branche mère, et
- on a N supérieur ou égal à deux, N >= 2, et M supérieur ou égal à deux multiplié par N, M >= 2*N,
**caractérisé en ce que** la station radio (NodeB1, NodeB2) ordonnance un nombre K, avec K >= 2, des N codes (C16,6, C16,7, C16,8, C16,9, C16,10) pour des transmissions de données simultanées entre la station radio et des stations d'usagers (UE1, UE2) de sorte que chaque code (C16,6, C16,7, C16,8, C16,9, C16,10) n'est ordonnancé qu'une seule fois et que, des branches qui correspondent aux K codes (C16,6, C16,7, C16,8, C16,9, C16,10) dans le cas d'une représentation dans le niveau,
- K/2 branches partent de la première branche mère et K/2 branches partent de la deuxième branche mère si K est un nombre pair ou
- (K-1)/2 branches partent de la première branche mère et (K+1)/2 branches partent de la deuxième branche mère si K est un nombre impair.

3. Procédé permettant d'exécuter le procédé selon la revendication 1 dans une première étape et permettant d'exécuter le procédé selon la revendication 2 dans une deuxième étape qui se produit temporellement après la première étape.

4. Procédé selon l'une des revendications 2 ou 3, **caractérisé en ce que** les branches correspondant aux K codes (C16,6, C16,7, C16,8, C16,9, C16,10) sont adjacentes sans discontinuité pour chaque station d'usager (UE1, UE2).

5. Procédé selon la revendication 4, **caractérisé en ce qu'**il est mis fin à l'ordonnancement de codes (C16,6, C16,7, C16,8, C16,9) pour au moins une station d'usager (UE1; UE2) et un ordonnancement existant de codes (C16,8, C16,9; C16,6, C16,7) est modifié pour les autres stations d'usagers (UE2; UE1) par nouvelle application du procédé selon la revendication 4.

6. Dispositif côté réseau (RNC) pour un système de radiocommunication,
- avec des moyens (ST1) pour mettre à disposition un nombre de M codes (C16,0, C16,1, C16,2, ..., C16,15), chacun des M codes (C16,0, C16,1, C16,2, ..., C16,15) pouvant être représenté sous la forme d'une branche d'un même niveau d'un arbre de codes de sorte qu'une première moitié des branches part d'une première branche mère et qu'une deuxième moitié des branches part d'une deuxième branche mère,
- avec des moyens (ST1) pour allouer des codes pour des transmissions de données entre une station radio (NodeB1, NodeB2) et au moins une station d'usager (UE1, UE2) via une interface aérienne de manière telle qu'un nombre de N codes (C16,6, C16,7, C16,8, C16,9, C16,10) des M codes (C16,0, C16,1, C16,2, ..., C16,15) est alloué à la station radio (NodeB1, NodeB2) de manière telle que les branches correspondant aux N codes (C16,6, C16,7, C16,8, C16,9, C16,10) dans le cas d'une représentation dans le niveau sont adjacentes sans discontinuité et on a N supérieur ou égal à deux, N >= 2, et M supérieur ou égal à deux multiplié par N, M >= 2*N,
**caractérisé en ce que** les moyens (ST1) d'allocation sont réalisés de manière telle que, des branches qui correspondent aux N codes (C16,6, C16,7, C16,8, C16,9, C16,10) dans le cas d'une représentation dans le niveau,
- N/2 branches partent de la première branche mère et N/2 branches partent de la deuxième branche mère si N est un nombre pair ou
- (N-1)/2 branches partent de la première branche mère et (N+1)/2 branches partent de la deuxième branche mère si N est un nombre impair.

7. Station radio (NodeB1, NodeB2) pour un système de radiocommunication,
- avec des moyens (ST2, ST3) pour ordonnancer des codes pour des transmissions de données entre la station radio (NodeB1, NodeB2) et au moins une station d'usager (UE1, UE2) via une interface aérienne, un nombre de N codes (C16,6, C16,7, C16, 8, C16,9, C16,10) de M codes (C16,0, C16, 1, C16,2, ..., C16,15) étant donné pour ordonnancement et chacun des M codes (C16,0, C16,1, C16,2, ..., C16,15) pouvant être représenté sous la forme d'une branche d'un même niveau d'un arbre de codes de sorte qu'une première moitié des branches part d'une première branche mère et qu'une deuxième moitié des branches part d'une deuxième branche mère, avec N supérieur ou égal à deux, N >= 2, et M supérieur ou égal à deux multiplié par N, M >= 2*N,
**caractérisée en ce que** les moyens (ST2, ST3) d'ordonnancement sont réalisés de manière telle qu'un nombre K, avec K >= 2, des N codes (C16,6, C16,7, C16, 8, C16,9, C16,10) est ordonnancé pour des transmissions de données simultanées entre la station radio (NodeB1, NodeB2) et des stations d'usagers (UE1, UE2) de sorte que chaque code (C16,6, C16,7, C16,8, C16,9, C16,10) n'est ordonnancé qu'une seule fois et que, des branches qui correspondent aux K codes (C16,6, C16,7, C16,8, C16,9, C16,10) dans le cas d'une représentation dans le niveau,
- K/2 branches partent de la première branche mère et K/2 branches partent de la deuxième branche mère si K est un nombre pair ou
- (K-1)/2 branches partent de la première branche mère et (K+1)/2 branches partent de la deuxième branche mère si K est un nombre impair.

8. Station radio (NodeB1, NodeB2) selon la revendication 7, **caractérisée en ce que** les moyens (ST2, ST3) d'ordonnancement sont réalisés de manière telle que les branches correspondant aux K codes (C16,6, C16,7, C16,8, C16,9, C16,10) sont adjacentes sans discontinuité pour chaque station d'usager (UE1, UE2).

9. Station radio (NodeB1, NodeB2) selon la revendication 8, **caractérisée en ce que** les moyens (ST2, ST3) d'ordonnancement sont réalisés de manière telle que, après la fin de l'ordonnancement de codes (C16,6, C16,7; C16,8, C16,9) pour au moins une station d'usager (UE1; UE2), un ordonnancement existant de codes (C16,8, C16,9; C16,6, C16,7) est modifié pour les autres stations d'usagers (UE2; UE1) par nouvelle application du procédé selon la revendication 4.
